# EUROPÄISCHE PATENTSCHRIFT

(11) **EP 1 685 925 B1**
(45) Veröffentlichungstag und Bekanntmachung des Hinweises auf die Patenterteilung: **09.07.2008**
(21) Anmeldenummer: 05025394.7
(22) Anmeldetag: 22.11.2005
(51) Int. Cl.: B23Q 11/10, B67D 5/04

(54) **Rückfördervorrichtung für den Kühlschmierstoff einer Werkzeugmaschine**
Recirculation mechanism for the cooling liquid of a machine tool
Dispositif de recirculation pour le liquide de refroidissement d'une machine outil

(30) Priorität: 01.02.2005 DE 102005004561
(43) Veröffentlichungstag der Anmeldung: 02.08.2006
(73) Patentinhaber: Bürener Maschinenfabrik GmbH, 33142 Büren (DE)
(72) Erfinder: Krause, Dieter, Dr., 33142 Büren (DE); Dierkes, Bernd, 33100 Paderborn (DE)
(74) Vertreter: Henseler, Daniela

(56) Entgegenhaltungen:
- DE-A1- 4 312 101
- DE-A1- 10 303 784
- US-A- 5 223 156
- US-A1- 2003 183 562

## Beschreibung

Die Erfindung betrifft eine Rückfördervorrichtung für an Bearbeitungsmaschinen anfallenden verbrauchten Kühlschmierstoff nach dem Oberbegriff des Anspruchs 1.

Aus DE 43 12 101 A1 ist ein Verfahren zum Transportieren verschmutzter Kühlschmierstoffe bekannt. An verschiedenen Anfallorten gesammelter verschmutzter Kühlschmierstoff wird über in den Kühlschmierstoff eintauchende Steigleitungen zu einer gemeinsamen oben liegenden Sammelleitung, die zu einem tiefer liegenden angeordneten Sammelbehälter führt, transportiert. Von dort wird der Kühlschmierstoff gegebenenfalls nach vorheriger Reinigung über Versorgungsleitungen zurück zu den verschiedenen Anfallsorten transportiert. Damit Kühlschmierstoff nach dem Saugheberprinzip über die Steigleitungen von den Anfallorten abgesaugt werden kann, ist ein vorheriges Auffüllen der Sammelleitung und der Steigleitungen mit Kühlschmierstoffen erforderlich. Dazu ist an die Versorgungsleitung ein Befüllbehälter oberhalb der Sammelleitung angeschlossen, der mit der Sammelleitung absperrbar verbunden ist.

Aus US 2003/0183562 A1 ist eine Rückfördervorrichtung für den an Werkzeugmaschinen anfallenden Kühlschmierstoff vorgesehen, bei der Kühlschmierstoff in einem Druckbehälter gesammelt und durch Beaufschlagung mit Druckgas durch eine Sammelleitung gedrückt wird. Dazu ist vorgesehen, dass ein Teil des Vorlaufs in den Druckbehälter gepumpt wird.

Aus DE 103 03 784 A1 ist eine Rückfördervorrichtung für an Bearbeitungsmaschinen anfallenden verbrauchten Kühlschmierstoff bekannt, bei der verbrauchter Kühlschmierstoff in eine obenliegende Sammelleitung gepumpt wird, die über einen verschließbaren Auslaß an eine tiefer stehende Filteranlage angeschlossen ist. Von der Filteranlage wird über einen Vorlauf gereinigter Kühlschmierstoff zu den Bearbeitungsmaschinen geführt. Ein Spülbehälter ist ferner vorgesehen, der über der Sammelleitung angeordnet ist und mit der Sammelleitung in Verbindung steht, um in die Sammelleitung einströmenden und bei verschlossenem Auslaß dort aufgestauten Kühlschmierstoff für eine Spülung der Sammelleitung zu speichern. Die Spülung und damit auch die Reinigung ist einfach gestaltet. Nachteilig ist jedoch, daß die Spülung mit verschmutztem Kühlschmierstoff bei längerem Einsatz des Systems zu unerwünschten Verschmutzungen des Spülbehälters führt.

Aufgabe der Erfindung ist es daher, eine Rückfördervorrichtung für an Bearbeitungsmaschinen anfallenden verbrauchten Kühlschmierstoff zu schaffen, die einfach aufgebaut ist und gut und problemlos arbeitet.

Diese Aufgabe wird durch die Merkmale des Anspruchs 1 gelöst.

Hierdurch wird eine Rückfördervorrichtung geschaffen, bei der die Sammelleitung mit sauberem Kühlschmierstoff gespült wird. Durch eine Rückschlagarmatur ist sichergestellt, daß kein verunreinigter Kühlschmierstoff in den Spülbehälter gelangt, so daß eine Verunreinigung des Spülbehälters ausgeschlossen ist. Gleichzeitig wird als Antriebsquelle für die Strömung im Leitungssystem die Saugwirkung des geodätischen Gefälles genutzt, wodurch die Spülung mit hoher Strömungsgeschwindigkeit erfolgt.

Weitere Ausgestaltungen der Erfindung sind der nachfolgenden Beschreibung und den Unteransprüchen zu entnehmen.

Die Erfindung wird nachstehend anhand des in der beigefügten Abbildung dargestellten Ausführungsbeispiels näher erläutert.

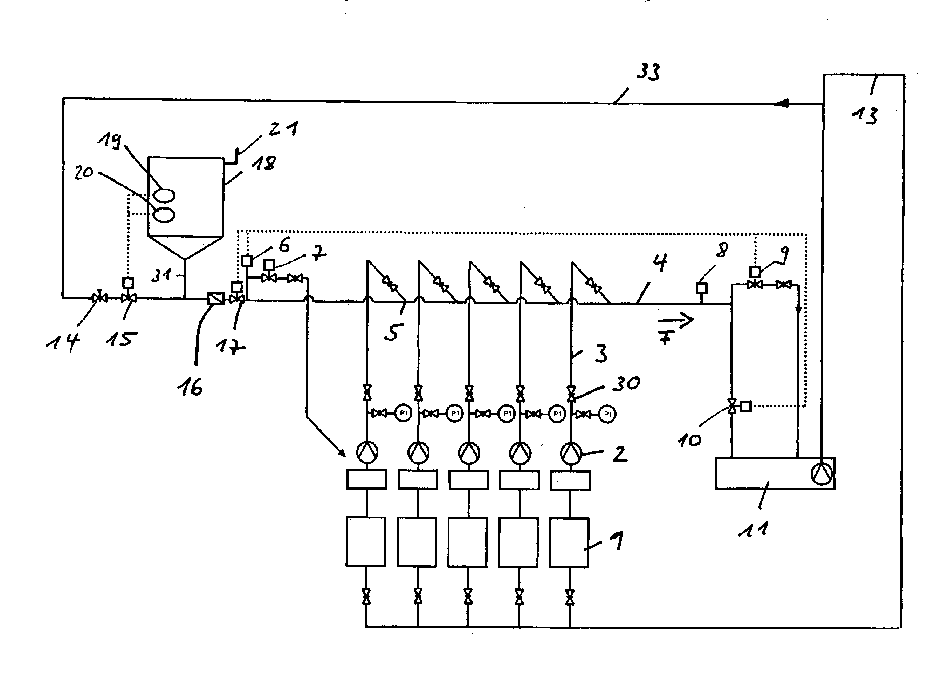

Fig. 1 zeigt schematisch eine Rückfördervorrichtung für eine Mehrzahl Bearbeitungsmaschinen.

Die Erfindung betrifft eine Rückfördervorrichtung für an Bearbeitungsmaschinen 1 anfallenden verbrauchten Kühlschmierstoff mit einer Mehrzahl Pumpen 2, wobei mindestens jeweils eine Pumpe 2 kontinuierlich oder diskontinuierlich von einer Bearbeitungsmaschine 1 verbrauchten Kühlschmierstoff abzieht.

Bei dem in Fig. 1 dargestellten Ausführungsbeispiel sind beispielsweise fünf Bearbeitungsmaschinen 1 vorgesehen, die beispielsweise als Schleif-, Fräs-, Dreh- oder sonstige spanende Werkzeugmaschinen ausgebildet sind. Die jeder Bearbeitungsmaschine 1 zugeordnete Pumpe 2 fördert über eine Steigleitung 3 verunreinigten Kühlschmierstoff in eine Sammelleitung 4. Die Steigleitungen 3 sind über Absperrglieder 30 jeweils einzeln absperrbar und münden alle, bezogen auf die Fließrichtung F, über in Reihe angeordnete Anschlüsse 5 in der Sammelleitung 4.

Die Sammelleitung 4 ist über dem Hallenflur angeordnet und verläuft mit vorzugsweise leichtem Gefälle zu einer tiefer angeordneten Filteranlage 11. Vor dem Eintritt in die Filteranlage 11 geht die Sammelleitung 4 vorzugsweise aus einem im wesentlichen horizontalen Abschnitt in ein Fallstück über. Über eine ausgangsseitige Absperrarmatur 10 ist die Sammelleitung 4 an die Filteranlage 11 angeschlossen. Von der Filteranlage 11 ist ein Vorlauf 13 zu den Bearbeitungsmaschinen 1 geführt, wozu mindestens eine Systempumpe 12 vorgesehen ist. Ferner ist ein Vorlauf 33 zu einem Spülbehälter 18 abgezweigt, der über ein Absperrglied 15 mit dem Spülbehälter 18 verbunden ist. In den Vorlauf 33 kann ferner eine Drossel 14 eingebaut sein. Der Spülbehälter 18 ist oberhalb der Sammelleitung 4 angeordnet und steht mit dieser in Verbindung.

Der Spülbehälter 18 steht mit der Sammelleitung 4 über eine eingangsseitige Absperrarmatur 17 in Verbindung. Dieser Absperrarmatur 17 ist zum Spülbehälter 18 hin vorzugsweise eine Rückschlagarmatur 16 vorgeordnet und zur Sammelleitung 4 hin eine Messeinrichtung 6 vorzugsweise direkt nachgeordnet. Die Meßeinrichtung 6 dient dazu festzustellen, wann die Sammelleitung 4 voll gelaufen bzw. vollständig befüllt ist. Hierzu kann die Messeinrichtung 6 beispielsweise von einer Druckmeßeinrichtung oder einem Durchflußwächter gebildet werden. Ferner ist eine Steuerung für die eingangsseitige Absperrarmatur 17 und die ausgangsseitige Absperrarmatur 10 vorgesehen, daß in Abhängigkeit eines vollständigen Befüllzustandes der Sammelleitung 4 die Absperrarmaturen 10, 17 aus einer Schließstellung in eine Öffnungsstellung verfahrbar sind.

Der Spülbehälter 18 ist von oben oder wie dargestellt von unten befüllbar über eine Abzweigungsleitung 31 des Vorlaufs 33. Der Spülbehälter 18 weist eine Entlüftungsvorrichtung 21 auf, oder ist als offener Behälter ausgebildet. Der Spülbehälter 18 dient zur Spülung der Sammelleitung 4 mit sauberem Kühlschmierstoff. Der Spülbehälter 18 ist durch den in den Vorlauf 33 gepumpten sauberen Kühlschmierstoff über die Vorlaufleitung 31 befüllbar. Über am Spülbehälter 18 angebrachte Füllstandsmesser 19, 20 ist das Absperrglied 15 betätigbar. Der Füllstandsmesser 19 liefert ein Signal, wenn der Kühlschmierstoff im Spülbehälter 18 einen vorbestimmten maximalen Füllstand erreicht hat. Aufgrund des vom Füllstandsmesser 19 bei maximaler Menge im Spülbehälter 18 erhaltenen Signals schließt die Absperrarmatur 15. Der Füllstandsmesser 20 liefert ein Signal, wenn der Kühlschmierstoff im Spülbehälter 18 einen vorbestimmten minimalen Füllstand erreicht bzw. unterschreitet.

Der Vorlauf 33 steht über die Rückschlagarmatur 16 und die eingangsseitige Absperrarmatur 17 in Verbindung mit der Sammelleitung 4. Die Rückschlagarmatur 16 verhindert einen Fluß von der Sammelleitung 4 in Richtung des Spülbehälters 18 und kann als Kugel-Rückschlagventil oder Rückschlagklappe, vorzugsweise federbelastet, ausgestaltet sein. Die Absperrarmaturen 17, 10 begrenzen beidseitig die Sammelleitung 4, um diese als zeitweilige Staustrecke zu betreiben. Für ein Befüllen einer abgesperrten Sammelleitung 4 mit anfallendem verbrauchtem Kühlschmierstoff sind Entlüftungen 7, 9 im Anfangs- und Endbereich eines im wesentlichen horizontalen Abschnitts der Sammelleitung 4 vorgesehen.

Zum Betrieb der Rückfördervorrichtung betätigt die Steuerung die Absperrarmaturen 10, 17 und die Entlüftungsvorrichtung 6, 7. Die Betätigung erfolgt in Reaktion auf Signale des Druckschalters 6, der auf einen wählbaren maximalen Druck einstellbar ist. Ein wählbarer minimaler Druck kann zudem durch einen weiteren Druckschalter 8 erkannt werden.

Im Normalbetrieb arbeitet die Rückfördervorrichtung mit der Sammelleitung 4 als Freispiegelleitung. Hierbei fördern die Pumpen 2 in die Sammelleitung 4. Der Kühlschmierstoff fließt im Rücklauf aufgrund der Schwerkraft durch die Sammelleitung 4 zur Filteranlage 11. Die Sammelleitung 4 ist so dimensioniert, daß bezogen auf die Anzahl der Flüssigkeitszuführungen immer eine optimale Fließgeschwindigkeit im Rohr vorliegt. Dabei ist die ausgangsseitige Absperrarmatur 10 geöffnet, die Entlüftungen 7, 9 sind ebenfalls geöffnet und die eingangsseitige Absperrarmatur 17 ist geschlossen. Das geschlossene Rohrleitungssystem arbeitet nur teilgefüllt.

Der Sonderzustand der Rückfördervorrichtung ist die Betriebsart des Spülbetriebs, der aus zwei Phasen besteht, der Befüllphase und der Spülphase selbst. Während der Befüllphase wird die Sammelleitung 4 vollständig mit Kühlschmierstoff befüllt. Dazu sind die ausgangsseitige Absperrarmatur 10 und die eingangsseitige Absperrarmatur 17 geschlossen, die Entlüftungen 7, 9 sind geöffnet. Die Rückschlagarmatur 16 verhindert daß verschmutzter Kühlschmierstoff in die Vorlaufleitungen 31, 33 eindringen kann. Sobald die Sammelleitung 4 komplett mit Kühlschmierstoff gefüllt ist, wird dies von der Meßeinrichtung 6 erkannt, z.B. über einen Druckanstieg, wenn die Meßeinrichtung 6 als Druckschalter ausgebildet ist. In Abhängigkeit von einem von der Messeinrichtung 6 erkannten Wert für die vollständige Befüllung der Sammelleitung 4, kann in die Spülphase übergegangen werden. Dazu werden die Absperrarmaturen 10, 17 geöffnet und die Entlüftungen 7, 9 geschlossen.

Die Spülphase endet, wenn der Spülbehälter 18 leer ist oder sein minimales Niveau erreicht hat. Die Entlüftungen 7, 9 werden dann wieder geöffnet und die eingangsseitige Absperrarmatur 17 geschlossen, so daß das System wieder in den Normalbetrieb übergeht.

## Patentansprüche

1. Rückfördervorrichtung für an Bearbeitungsmaschinen (1) anfallenden verbrauchten Kühlschmierstoff mit einem von der Bearbeitungsmaschine (1) in eine gemeinsame oben liegende Sammelleitung (4) geführten Rücklauf, der zu einer tiefer angeordneten, über eine ausgangseitige Absperrarmatur (10) angeschlossene Filteranlage (11) führt, von wo ein Vorlauf (13, 33) geführt ist zu den Bearbeitungsmaschinen (1), zu einer eingangsseitigen Absperrarmatur (17) der Sammelleitung (4) und einem Spülbehälter (18), der oberhalb der Sammelleitung (4) angeordnet ist und mit dieser in Verbindung steht, und mit einer Messeinrichtung (6) zum Erkennen einer vollständigen Befüllung der Sammelleitung (4) und einer Steuerung für die eingangs- und ausgangsseitigen Absperrarmaturen (17, 10), so daß in Abhängigkeit einer vollständigen Befüllung der Sammelleitung (4) die Absperrarmaturen (17, 10) aus einer Schließstellung in eine Öffnungsstellung verfahrbar sind, **dadurch gekennzeichnet, daß** der Spülbehälter (18) über eine Abzweigungsleitung (31) des Vorlaufs (33) in Verbindung steht mit der Sammelleitung (4) und der Vorlauf (33) in Fließrichtung (F) flußabwärts der Abzweigungsleitung (31) an die eingangsseitige Absperrarmatur (17) der Sammelleitung (4) über eine Rückschlagarmatur (16) angeschlossen ist.

2. Rückfördervorrichtung nach Anspruch 1, **dadurch gekennzeichnet, daß** der Absperrarmatur (17) zum Spülbehälter (18) hin eine Rückschlagarmatur (16) vorgeordnet ist.

3. Rückfördervorrichtung nach Anspruch 1 oder 2, **dadurch gekennzeichnet, daß** die Messeinrichtung (6) als Druckmesseinrichtung ausgebildet ist.

4. Rückfördervorrichtung nach Anspruch 1 oder 2, **dadurch gekennzeichnet, daß** die Meßeinrichtung (6) als Durchflußwächter ausgebildet ist.

5. Rückfördervorrichtung nach einem der Ansprüche 1 bis 4, **dadurch gekennzeichnet, daß** die Sammelleitung (4) mit leichtem Gefälle zur Filteranlage (11) ausgebildet ist.

6. Rückfördervorrichtung nach einem der Ansprüche 1 bis 4, **dadurch gekennzeichnet, daß** die Sammelleitung (4) mindestens einen horizontalen Streckenabschnitt aufweist.

7. Rückfördervorrichtung nach einem der Ansprüche 1 bis 6, **dadurch gekennzeichnet, daß** die Sammelleitung (4) in einem Endbereich eine Fallstrecke aufweist.

8. Rückfördervorrichtung nach einem der Ansprüche 1 bis 7, **dadurch gekennzeichnet, daß** für den Rücklauf in die Sammelleitung (4) Steigleitungen (3) vorgesehen sind.

9. Rückfördervorrichtung nach einem der Ansprüche 1 bis 8, **dadurch gekennzeichnet, daß** die Sammelleitung (4) Entlüftungen (7, 9) aufweist, die über die Steuerung schließbar sind.

10. Rückfördervorrichtung nach einem der Ansprüche 1 bis 9, **dadurch gekennzeichnet, daß** die Rückschlagarmatur (16) eine Armatur mit geringem Öffnungswiderstand ist.

11. Rückfördervorrichtung nach Anspruch 10, **dadurch gekennzeichnet, daß** die Rückschlagarmatur (16) als eine Rückschlagklappe ausgebildet ist.

## Claims

1. Recirculation apparatus for consumed cooling lubricant accumulating at machine tools (1), having a return which is directed from the machine tool (1) into a common overhead collecting line (4) and which leads to a filter unit (11) which is arranged at a deeper level and is connected via an outlet-side shut-off fitting (10) and from where a feed (13, 33) is directed to the machine tools (1) and to an inlet-side shut-off fitting (17) of the collecting line (4) and a flushing tank (18), which is arranged above the collecting line (4) and is connected to the latter, and having a measuring device (6) for detecting complete filling of the collecting line (4) and having a controller for the inlet- and outlet-side shut-off fittings (17, 10), such that the shut-off fittings (17, 10) can be shifted from a closed position into an open position as a function of complete filling of the collecting line (4), **characterized in that** the flushing tank (18) is connected to the collecting line (4) via a branch line (31) of the feed (33), and the feed (33), in the flow direction (F) downstream of the branch line (31), is connected to the inlet-side shut-off fitting (17) of the collecting line (4) via a non-return fitting (16).

2. Recirculation apparatus according to Claim 1, **characterized in that** a non-return fitting (16) is arranged upstream of the shut-off fitting (17) towards the flushing tank (18).

3. Recirculation apparatus according to Claim 1 or 2, **characterized in that** the measuring device (6) is designed as a pressure-measuring device.

4. Recirculation apparatus according to Claim 1 or 2, **characterized in that** the measuring device (6) is designed as a flow-rate monitor.

5. Recirculation apparatus according to one of Claims 1 to 4, **characterized in that** the collecting line (4) is designed with a slight fall towards the filter unit (11).

6. Recirculation apparatus according to one of Claims 1 to 4, **characterized in that** the collecting line (4) has at least one horizontal line section.

7. Recirculation apparatus according to one of Claims 1 to 6, **characterized in that** the collecting line (4) has a dropping section in an end region.

8. Recirculation apparatus according to one of Claims 1 to 7, **characterized in that** rising lines (3) are provided for the return into the collecting line (4).

9. Recirculation apparatus according to one of Claims 1 to 8, **characterized in that** the collecting line (4) has vents (7, 9) which can be closed via the controller.

10. Recirculation apparatus according to one of Claims 1 to 9, **characterized in that** the non-return fitting (16) is a fitting having a low opening resistance.

11. Recirculation apparatus according to Claim 10, **characterized in that** the non-return fitting (16) is designed as a non-return flap.

## Revendications

1. Dispositif de recirculation pour le liquide de refroidissement-lubrification usé qui se présente à des machines-outils (1), comprenant une conduite de retour, menée depuis la machine-outil (1) jusque dans une conduite de collecte (4) commune située en haut et menant à une installation de filtration (11), agencée plus profondément et raccordée via une robinetterie d'isolement (10) côté sortie, depuis laquelle une conduite d'amenée (13, 33) est menée vers la machine-outil (1), vers une robinetterie d'isolement (17) côté entrée de la conduite de collecte (4), et vers un récipient de rinçage (18) qui est agencé au-dessus de la conduite de collecte (4) et qui est raccordé à celle-ci, et comprenant un système de mesure (6) pour reconnaître le remplissage total de la conduite de collecte (4), et une commande pour les robinetteries d'isolement (17, 10) côté entrée et côté sortie, de sorte que, en fonction d'un remplissage complet de la conduite de collecte (4), les robinetteries d'isolement (17, 10) peuvent être déplacées depuis une position de fermeture jusque dans une position d'ouverture, **caractérisé en ce que** le récipient de rinçage (18) communique avec la conduite de collecte (4) via une conduite de dérivation (31) de la conduite d'amenée (33), et la conduite d'amenée (33) est raccordée à la robinetterie d'isolement (17) côté entrée de la conduite de collecte (4) via une robinetterie antiretour (16), en aval de la conduite de dérivation (31) en direction d'écoulement (F).

2. Dispositif de recirculation selon la revendication 1, **caractérisé en ce qu'**une robinetterie antiretour (16) est agencée en amont de la robinetterie d'isolement (17) vers le récipient de rinçage (18).

3. Dispositif de recirculation selon la revendication 1 ou 2, **caractérisé en ce que** le système de mesure (6) est réalisé sous forme de système de mesure de pression.

4. Dispositif de recirculation selon la revendication 1 ou 2, **caractérisé en ce que** le système de mesure (6) est réalisé sous forme de dispositif de surveillance de débit.

5. Dispositif de recirculation selon l'une des revendications 1 à 4, **caractérisé en ce que** la conduite de collecte (4) est réalisée avec une faible pente vers l'installation de filtration (11).

6. Dispositif de recirculation selon l'une des revendications 1 à 4, **caractérisé en ce que** la conduite de collecte (4) comprend au moins un tronçon partiel horizontal.

7. Dispositif de recirculation selon l'une des revendications 1 à 6, **caractérisé en ce que** la conduite de collecte (4) comprend un tronçon descendant dans une zone terminale.

8. Dispositif de recirculation selon l'une des revendications 1 à 7, **caractérisé en ce qu'**il est prévu des conduites montantes (3) pour le retour dans la conduite de collecte (4).

9. Dispositif de recirculation selon l'une des revendications 1 à 8, **caractérisé en ce que** la conduite de collecte (4) comprend des évents (7, 9) qui peuvent être fermés via la commande.

10. Dispositif de recirculation selon l'une des revendications 1 à 9, **caractérisé en ce que** la robinetterie antiretour (16) est une robinetterie présentant une faible résistance à l'ouverture.

11. Dispositif de recirculation selon la revendication 10, **caractérisé en ce que** la robinetterie antiretour (16) est réalisée sous forme de clapet antiretour.
